## Europäisches Patentamt
## European Patent Office
## Office européen des brevets

(19)

(11) Veröffentlichungsnummer : **0 321 050 B1**

(12) **EUROPÄISCHE PATENTSCHRIFT**

(45) Veröffentlichungstag der Patentschrift :
**22.03.95 Patentblatt 95/12**

(51) Int. Cl.$^6$ : **H04L 12/42**

(21) Anmeldenummer : **88202862.4**

(22) Anmeldetag : **13.12.88**

(54) Vermittlungsknoten eines Breitband-Vermittlungssystems.

(30) Priorität : **17.12.87 DE 3742748**

(43) Veröffentlichungstag der Anmeldung :
**21.06.89 Patentblatt 89/25**

(45) Bekanntmachung des Hinweises auf die
Patenterteilung :
**22.03.95 Patentblatt 95/12**

(84) Benannte Vertragsstaaten :
**DE FR GB IT SE**

(56) Entgegenhaltungen :
EP-A- 0 126 196
EP-A- 0 183 592
EP-A- 0 353 927
INTERNATIONAL SWITCHING SYMPOSIUM
1987, 15.-20. März 1987, Phoenix, Arizona, Seiten 809-813, IEEE, US; A. KITAMURA et al.:
"High speed and high capacity packet switching system architecture for ISDN"
15th INTERNATIONAL SYMPOSIUM ON COMPUTER ARCHITECTURE, 30. Mai - 2. Juni 1988, Honolulu, Hawaii, Seiten 343-354, IEEE, NEW YORK, US; Y. TAMIR et al.:
"High-performance multi-queue buffers for VLSI communication switches"

(56) Entgegenhaltungen :
**IEEE JOURNAL ON SELECTED AREAS IN COMMUNICATIONS, Band SAC-5, Nr. 8, Oktober 1987, Seiten 1284-1292, New york, US; S. NOJIMA et al.:** "Integrated services communication switches"
**IEEE ELECTRO, vol.7, May 1982, NEW YORK,US pages 1 - 7 R.M. GROW 'A TIMED TOKEN PROTOCOL FOR LOCAL AREA NETWORKS'**

(73) Patentinhaber : **Philips Patentverwaltung GmbH
Wendenstrasse 35c
D-20097 Hamburg (DE)**
(84) **DE**
Patentinhaber : **Philips Electronics N.V.
Groenewoudseweg 1
NL-5621 BA Eindhoven (NL)**
(84) **FR GB IT SE**

(72) Erfinder : **Lehnert, Ralf, Dr.-Ing.
Am Nordhang 15
D-8501 Kalchreuth (DE)**
Erfinder : **Kowalk, Wolfgang, Dr.-Ing.
Webersplatz 12
D-8500 Nürnberg 1 (DE)**

(74) Vertreter : **Peuckert, Hermann, Dipl.-Ing.
Philips Patentverwaltung GmbH,
Wendenstrasse 35c
D-20097 Hamburg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 321 050 B1

## Beschreibung

Die Erfindung betrifft einen Vermittlungsknoten eines Breitband-Vermittlungssystems, das zur Zerlegung von Nachrichten in Blöcke und zur Übertragung der Blöcke über breitbandige Übertragungswege nach einem asynchronen Zeitvielfachverfahren dient,
mit Eingangsschaltungen, die zur Zuführung von Blöcken über Eingangsleitungen und zur Zwischenspeicherung der Blöcke vorgesehen ist, und
mit einem Koppelfeld, welches zur Weiterleitung der Blöcke an Ausgangsschaltungen vorgesehen ist.

Im Rahmen der Entwicklung zukünftiger, integrierter Breitbandnetze wird diskutiert, nach welchem Verfahren die digitale oder analoge Information - zum Teil mit hohem Bandbreitebedarf - in digitalen Netzen übertragen werden soll. Schon lange bekannt ist die Paketvermittlung (Packet Switching), bei der die (digitalen) Nachrichten in Pakete aufgeteilt werden, wobei in jedem Paket Zusatzinformationen neben der Nutzinformation enthalten sind, welche u.a. Angaben über das Ziel (Adresse) enthalten. Dadurch lassen sich Nachrichten aufgrund ihrer Paketadressen zum an der Verbindung beteiligten Partner lenken, was nur dann Übertragungskapazität erfordert, wenn tatsächlich eine Nachricht zu übermitteln ist.

Weiterhin ist seit langem die Durchschaltevermittlung (Circuit Switching) bekannt, welche Übertragungskapazität für die gesamte Verbindungsdauer erfordert - unabhängig davon, ob gerade Nachrichten übermittelt werden oder nicht. Insbesondere beim Fernsprechnetz werden doppeltgerichtete Übertragungswege zur Verfügung gestellt, obwohl im allgemeinen nur einer der beiden Fernsprechteilnehmer spricht.

Bisher führte die Anwendung der Paketvermittlung beim Datenverkehr zu Durchsatzraten in der Größenordnung von 1 bis 1000 Paketen je Sekunde und darüber. Für künftige Dienste unter Benutzung des Verfahrens der Paketvermittlung, beispielsweise bei der Bildkommunikation, rechnet man heute bereits mit der tausendfachen Menge. Um solche Durchsatzraten zu erreichen, wird beim "Asynchronous Transfer Mode (ATM)" die zeitaufwendige Behandlung der Protokolle vom eigentlichen Durchschaltevorgang getrennt und die Pakete nach ihren Zieladressen auf die Übertragungswege verteilt. Zum Beschleunigen des Durchschaltevorgangs in den Koppelnetzen dienen stark vereinfachte Protokolle, die sich sehr schnell durch spezielle Schaltungsanordnungen auswerten lassen. Am Eingang des Vermittlungsknotens werden die ankommenden Datenpakete dezentral verarbeitet, indem diese entsprechend ihrem Ziel eine interne Adreßinformation erhalten, über das zentrale Koppelnetz durchgeschaltet und am Ausgang dann ohne die interne Adreßinformation weitergeleitet werden.

Ausführungsformen des "ATM" sind "Asynchronous Time Division (ATD)" und "Fast Packet Switching (FPS)". Hinsichtlich der Übertragungsverfahren (Transfer Mode) unterscheidet man "Synchronous Transfer Mode" und "Asynchronous Transfer Mode" sowie als Mischform "Hybrid Configurations". Beim "Synchronous Transfer Mode" wird ein bestimmter Übertragungskanal allein durch seinen zeitlichen Abstand von einem Synchronwort identifiziert. Beim "Asynchronous Transfer Mode" wird der jeweilige Kanal durch die Adressen (Header) seiner Pakete (Blöcke) gekennzeichnet, insbesondere ist der Anfang der Blöcke zu erkennen, damit sich die Header auswerten lassen. Hierzu werden Flags oder eine unterlegte Synchronstruktur verwendet, die eine konstante Blocklänge voraussetzt. Ein Beispiel hierfür ist "Asynchronous Time Division", bei dem immer wieder Synchronwörter als "Leerblöcke" in den Bitstrom eingeblendet werden.

Die Verfügbarkeit von Breitbandnetzen hängt von vielen Faktoren ab, unter anderem von der Normung, der kostengünstigen optischen Breitbandübertragung, von VLSI-Schaltkreisen für sehr hohe Verarbeitungsgeschwindigkeiten, sowie den Forderungen der Benutzer und Netzbetreiber. Die Konzeption solcher Breitbandnetze geht aus von dem kürzlich geschaffenen diensteintegrierten Fernmeldenetz ISDN.

Eine erste Möglichkeit zur Erweiterung des diensteintegrierten Fernmeldenetzes ISDN besteht in der Bereitstellung einer begrenzten Anzahl von Breitbandkanälen, wobei für jeden Breitbandkanal eine physikalische Verbindung hergestellt wird. Das dadurch geschaffene Netz mit Durchschaltevermittlung erfüllt jedoch nicht alle Anforderungen der Netzbetreiber an ein anpassungsfähiges Netz zur Übermittlung aller möglichen Dienste, darunter auch solcher Dienste mit noch nicht international standardisierten Parametern, sowie für zukünftige Dienste.

In der europäischen Patentanmeldung mit der Veröffentlichungsnummer 0 183 592 wurde ein Breitband-Vermittlungssystem vorgeschlagen, bei dem die Nachricht in Blöcke (Cells) zerlegt und über breitbandige Übertragungswege nach einem asynchronen Zeitvielfachverfahren übertragen werden. Die Blöcke (Cells) können gleiche oder unterschiedliche Länge aufweisen. Die Blöcke bestehen aus Nutz- sowie aus Adressinformation, wobei die Adressinformation in einem sogenannten Nachrichtenkopf (Header) untergebracht ist. Die Anzahl der Bits eines Blocks wird als dessen Länge bezeichnet, wobei in den Standardisierungsvorschlägen hierfür Werte zwischen 120 und 256 Bits für die Nutzinformation und 32 oder 16 Bits für den Header vorgesehen sind. Die Zeitintervalle, in denen Blöcke übertragen werden, werden als Rahmen (Frames) bezeichnet. Dabei kann ein Rahmen einen gültigen Block enthalten oder leer sein. Zwischen zwei Teilnehmern des Breit-

EP 0 321 050 B1

band-Vermittlungssystems besteht eine "virtuelle Verbindung" (virtual Connection), welche dadurch aufrechterhalten wird, daß die von den Teilnehmereinrichtungen abgesandten Blöcke mit eindeutigen Header-Kennungen versehen werden, die den Vermittlungsknoten das korrekte Weiterleiten der Blöcke gestatten. Die im Vermittlungsknoten ankommenden Blöcke von einer eingehenden Leitung werden unter Umsetzung des Headers auf eine ausgehende Leitung übertragen. Da während eines Rahmens zwei oder mehrere Blöcke für die gleiche Ausgangsleitung eintreffen können, müssen im Vermittlungsknoten sogenannte Wartepuffer vorgesehen werden. Im Wartepuffer werden einer oder mehrere dieser Blöcke solange zwischengespeichert, bis für diese ein freier Rahmen zur Verfügung steht.

Hinsichtlich der Pufferanordnung können die Vermittlungsknoten zentralgepufferte Systeme (wie beispielsweise aus der europäischen Patentanmeldung mit der Veröffentlichungsnummer 0 183 592 bekannt) oder dezentral gepufferte Systeme sein. Bei zentral gepufferten Systemen gibt es nur einen Puffer, in dem jede eingehende Leitung ihre ankommenden Blöcke ablegt und aus dem jede ausgehende Leitung für diese bestimmte Blöcke wieder ausliest. Systeme mit dezentraler Pufferung werden weiter dahingehend unterschieden, ob eine Pufferung von Blöcken ausschließlich auf der Eingangsseite (eine Ausführungsform hierfür ist beispielsweise in der nicht vorveröffentlichten deutschen Patentanmeldung mit dem amtlichen Aktenzeichen P 37 14 385.9 beschrieben) erfolgt oder ob die Puffer ausschließlich vor den ausgehenden Leitungen (vgl. beispielsweise IEEE, B 10.2.1, 1987, "The Knockout Switch: A Simple, Modular Architecture for High-Performance Packet Switching von J.S. Yeh et al) angeordnet sind oder ob es sich um Systeme mit Eingangs- und Ausgangspufferung handelt.

Der Vermittlungsknoten hat dabei die Aufgabe, Verbindungen zwischen den Teilnehmern des Breitbandvermittlungssystems herzustellen, welches wie folgt charakterisiert ist:
- Die Information muß in digitaler Form vorliegen, analoge Daten sind gegebenenfalls zu digitalisieren.
- Die in digitaler Form vorliegende Information wird in Blöcke gleicher Länge aufgeteilt.
- die Blöcke werden - mit einem Nachrichtenkopf (Header) der Länge h Bits versehen - an einen Vermittlungsknoten abgesetzt.
- Dieser sendet die Blöcke, abhängig von ihrem Ziel, an andere Vermittlungsknoten weiter, bis einer dieser Knoten den Block an den gewünschten Endteilnehmer abgeben kann.
- Der Header eines Blocks darf gegebenenfalls von einem Knoten verändert (umgesetzt) werden.
- Die Blöcke werden in einem festen Zeitrahmen übertragen, in welchem gerade für die Übertragung eines Blocks Zeit ist. Die Länge eines Blocks wird in Bits gemessen, die Dauer eines Zeitrahmens ist somit die Taktzeit mal der Gesamt-Blocklänge.
- Vor der Übertragung müssen sich die vermittlungsknoten mit dem Beginn eines Zeitrahmens synchronisieren. Da ein Netz größerer Ausdehnung nicht vollständig synchron arbeiten kann, ist jeweils die Verbindungsleitung zwischen zwei Knoten - auch Fernleitung genannt - zu synchronisieren. Die Vermittlungsknoten selbst haben den externen Takt durch Pufferung ihrem internen Takt anzugleichen.

Die wichtigsten Gütekriterien eines solchen Systems sind die erwartete Anzahl verlorengegangener Blöcke, sowie die Verzögerung von Blöcken in dem Vermittlungsknoten, bzw. deren Verweilzeitschwankung. Ersteres kann stets durch ausreichend große Puffer beliebig verringert werden, was jedoch die Verweilzeiten vergrößert. Hieraus sieht man bereits, daß diese beiden Anforderungen widersprüchliche Ziele darstellen.

In jedem Falle sind bei der Realisierung eines Koppelfelds Wartepuffer vorzusehen. Dabei können sich die Wartepuffer an der Eingangsseite an den Kreuzungspunkten der Koppelmatrix oder an der Ausgangsseite befinden. Am wenigsten aufwendig wird eine solche Koppelmatrix, wenn die Puffer nur an der Eingangs- bzw. nur an der Ausgangsseite eingebaut werden müssen.

Der Header muß aus ökonomischen Gründen recht knapp gehalten werden, so daß nicht eine Nummer von z.B. mehreren Millionen Teilnehmern übergeben werden kann. Aus diesem Grunde werden für je zwei Teilnehmer nur virtuelle Verbindungen aufgebaut: der Header ist somit nur für jeweils eine Verbindung festgelegt. Es zeigt sich, daß es am günstigsten ist, wenn ein Block auf jeder Fernleitung zwischen zwei Knoten stets wieder einen neuen Header erhält. Dieses bedingt, daß jeder Header erst umgerechnet (umgesetzt) werden muß, ehe der Block auf die Fernleitung, auf der er weiterzusenden ist, gegeben werden kann. Für diese Umsetzung, sowie für die Ermittlung der abgehenden Fernleitung, ist ausreichend Zeit zur Verfügung zu stellen.

Wie die vorstehenden Ausführungen zeigen, erfordert die Ausgestaltung des Koppelfelds für einen Vermittlungsknoten eines Breitband-Vermittlungssystems langwierige Untersuchungen und besondere Überlegungen, um die vielfältigen Abhängigkeiten und deren gegenseitigen Beeinflussungen zu berücksichtigen. Auch wenn zunächst Aufwandsüberlegungen dagegen sprechen würden, allzuviele Wartepuffer zu verwenden, so ist zu berücksichtigen, daß die Schaltungstechnologie für die betrachteten Systeme an den Grenzen der gegenwärtigen Halbleiterschaltzeiten liegt, und somit die Funktionalität solcher Systeme gegebenenfalls wichtiger ist als deren Aufwandsminimierung. Insbesondere müssen mögliche Leistungsengpässe frühzeitig erkannt werden. Leistungsengpässe können auftreten, wenn mehrere Blöcke gleichzeitig durch das Koppel-

3

netz einer Vermittlungsanlage geschickt werden. Die Blöcke können sich gegenseitig beeinflussen, wenn in dem Koppelnetz weniger Zwischenleitungen als notwendige Wege zur Verfügung stehen. Zwei Arten der Beeinflußung sind dabei von besonderer Bedeutung: der Konflikt und die Behinderung.

Zwei Blöcke (bzw. die sie aussendenden Schaltungen) stehen im Konflikt zueinander, wenn für die Übertragung die gleichen Schaltungsteile benutzt werden sollen. In der Regel wird dann einer der Blöcke gegenüber dem anderen priorisiert, und der andere Block muß entweder warten oder geht verloren.

Bei der Behinderung muß ein Block B auf die Bedienung eines Blocks A warten, wobei gleichzeitig aber A nicht bedient wird, weil ein Konflikt zwischen Block A und einem dritten Block C auftritt. Somit ist eine normale Wartesituation in einem Wartepuffer keine Behinderung, solange der erste Block in dem Puffer in jedem Rahmentakt übertragen wird. Erst wenn dieser in einen Konflikt tritt und nicht bedient wird, dadurch gleichzeitig aber auch kein anderer Block in diesem Wartepuffer übertragen werden kann, tritt eine Behinderung auf.

Der Begriff der Behinderung ist für die Leistungsbewertung solcher Systeme wichtig. Denn wenn ein nicht leerer Wartepuffer während einer Rahmenzeit nicht abgearbeitet werden kann, so kann man sich vorstellen, daß stattdessen ein zusätzlicher "virtueller" Block bearbeitet wird. Die Summe aus virtueller und realer Last ergibt dann die gesamte Belastung des Systems. Die virtuelle Last kann bei einigen Koppelfeldern nahezu so groß werden wie die reale Last. Dieses gilt vor allem für Koppelfelder, die die Eingangspufferung verwenden.

Der Erfindung liegt die Aufgabe zugrunde, ein Vermittlungsknoten eines Breitband-Vermittlungssystems zu schaffen, welcher das Auftreten von Leistungsengpässen im Koppelfeld weitgehend vermiedet.

Diese Aufgabe wird durch einen Vermittlungsknoten der eingangs genannten Art dadurch gelöst,

daß jede Eingangsschaltung einen Wartepuffer zur Vergrößerung der Pufferzugriffstiefe mit wenigstens einem Eingangspuffer und in Serie liegenden Zwischenpuffern enthält,

daß das Eingangspuffer einer Eingangsschaltung zur Zwischenspeicherung der auf der zugeordenten Eingangsleitung hintereinander ankommenden Blöcke vorgesehen ist,

daß die Zwischenpuffer zur Zwischenspeicherung der von dem Eingangspuffer ausgegebenen Blöcke dienen und

daß jeder Zwischenpuffer zur Absetzung eines zwischengespeicherten Blockes über das Koppelfeld zu einer Ausgangsschaltung vorgesehen ist.

Der Vermittlungsknoten weist den Vorteil auf, daß die Übertragungsrate des Koppelfelds auf einfache Art und Weise vergrößert wird, wobei keine größeren Verzögerungen bei der Durchschaltung der Blöcke im Koppelfeld auftreten und das Entstehen von Konflikten weitgehend vermieden wird.

In einer Weiterbildung der Erfindung ist der mit dem Eingangspuffer gekoppelte Zwischenpuffer zur Zwischenspeicherung eines Blocks von dem Eingangspuffer und die anderen Zwischenpuffer zur Zwischenspeicherung eines Blocks von dem davorliegenden Zwischenpuffer und die Zwischenpuffer derart ausgestaltet sind, daß eine Zwischenspeicherung in einem Zwischenpuffer nur bei keiner bisher vorgenommenen Zwischenspeicherung oder bei einer Weiterleitung des bisher gespeicherten Blockes an das Koppelfeld oder an den nachfolgenden Zwischenpuffer erfolgt.

Um die Verlustwahrscheinlichkeit für die Blöcke zu verringern, ist vorgesehen, daß jeder Ausgangsschaltung jeweils eine Teilkoppelfeldsteuerung zugeordnet ist, welche die Information darüber speichert, welcher Eingangspuffer zuletzt mit dem dieser Teilkoppelfeldsteuerung zugeordneten Ausgangspuffer verbunden war,

daß die Teilkoppelfeldsteuerung für den Fall, daß mehrere Eingangspuffer mit dem zugeordneten Ausgangspuffer verbunden werden sollen, denjenigen Eingangspuffer auswählt, welcher in einem fest vorgegebenen Auswahlzyklus aller Eingangspuffer hinter den zuletzt ausgelesenen Eingangspuffer steht. Hierbei ist der Auswahlzyklus durch die räumliche Anordnung der Eingangspuffer bestimmt.

Des weiteren ist vorgesehen, daß die Teilkoppelfeldsteuerung eine Auswahlzyklusschaltung aufweist, welche über eine Leitung mit der vorhergehenden und der nachfolgenden Teilkoppelfeldsteuerung verbunden ist,

daß die Auswahlzyklusschaltung mit dem Ausgang eines ODER-Gatters und einem Eingang eines UND-Gatters verbunden ist und

daß die beiden Eingänge des ODER-Gatters und der zweite Eingang des UND-Gatters mit einer Eingangspuffersteuerung mit vergrößerter Pufferzugriffstiefe in Verbindung stehen.

Ferner ist vorgesehen, daß die Teilkoppelfeldsteuerung ein D-Flip-Flop enthält, in welchem die Information darüber gespeichert wird, welcher Eingangspuffer zuletzt mit dem dieser Teilkoppelfeldsteuerung zugeordneten Ausgangspuffer verbunden war,

daß der Eingangspuffer zur Zuführung eines Sendebereitschaftssignals mit einem ersten Eingang eines ersten UND-Gatters, einen ersten Eingang eines ersten ODER-Gatters und dem Eingang eines Inverters verbunden ist,

daß der Ausgang des Inverters an einem ersten Eingang eines zweiten UND-Gatters anliegt,

daß die vorhergehende Teilkoppelfeldsteuerung zur Zuführung eines Steuersignals mit dem zweiten Eingang des zweiten UND-Gatters und dem ersten Eingang eines dritten UND-Gatters verbunden ist,

daß der zweite Ausgang des dritten UND-Gatters mit dem Ausgang des ersten ODER-Gatters und der Ausgang des dritten UND-Gatters mit dem D-Eingang des D-Flip-Flops verbunden ist,

daß der Q-Ausgang des D-Flip-Flops mit dem ersten Eingang eines zweiten ODER-Gatters, mit dem zweiten Eingang des ersten ODER-Gatters und mit dem zweiten Eingang des ersten UND-Gatters verbunden ist,

daß mit dem zweiten Eingang des zweiten ODER-Gatters der Ausgang des zweiten UND-Gatters verbunden ist, daß zur Zuführung eines Lesesignals der Ausgang des ersten UND-Gatters mit dem Eingangspuffer verbunden ist und

daß am Ausgang des zweiten ODER-Gatters die nachfolgende Teilkoppelfeldsteuerung angeschlossen ist.

Bei einer anderen Ausführung zur Verringerung der Verlustwahrscheinlichkeit der Blöcke ist vorgesehen, daß jeder Ausgangsschaltung jeweils eine Teilkoppelfeldsteuerung zugeordnet ist, welche die Information darüber speichert, welche Eingangspuffer mit dem zugeordneten Ausgangspuffer verbunden werden sollen und welche aus der räumlichen Anordnung der Eingangspuffer eine sequentiell abzuarbeitende Prioritätsfolge ableitet.

Die Erfindung wird im folgenden anhand in der Zeichnung dargestellter, verschiedener Koppelfelder näher beschrieben und erläutert. Es zeigt:

Fig. 1 im Blockschaltbild die Grundstruktur eines Vermittlungsknotens,

Fig. 2 ein Koppelfeld mit bitparalleler Übertragung der Blöcke,

Fig. 3 eine Ausführungsform, bei der das Koppelfeld selbst vervielfältigt ist,

Fig. 4 ein Koppelfeld mit vergrößerter Pufferzugriffstiefe der Eingangspuffersteuerung,

Fig. 5a und 5b die mittlere Warteschlangenlänge der Eingangspuffer und die Rahmenverlustwahrscheinlichkeit für verschiedene Ausführungsformen von Koppelfeldern gemäß Fig. 3,

Fig. 6 eine erste Ausführungsform für eine Teilkoppelfeldsteuerung und

Fig. 7 eine zweite Ausführungsform für eine Teilkoppelfeldsteuerung.

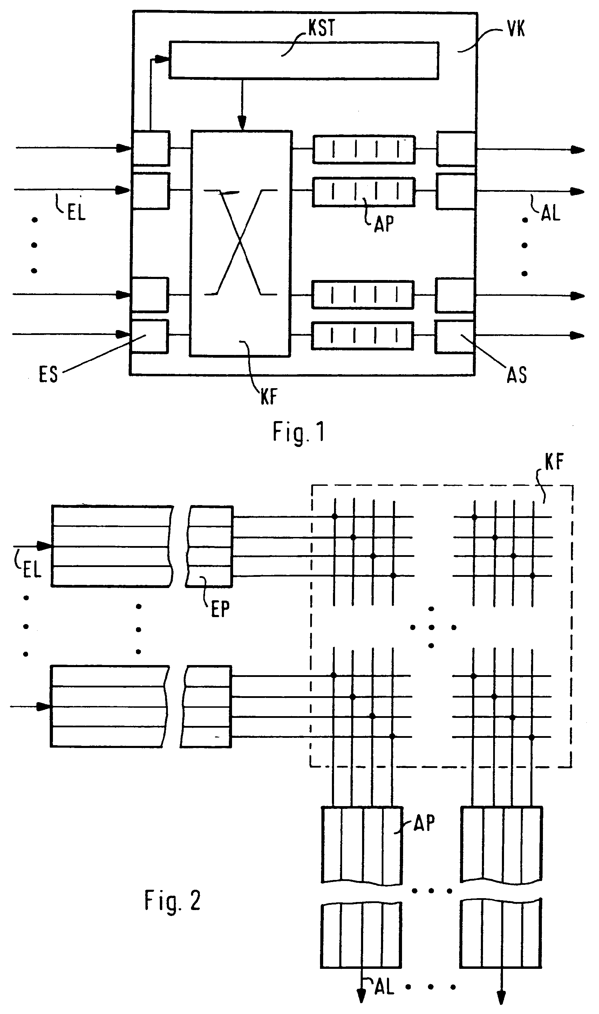

Fig. 1 zeigt die Grundstruktur eines Vermittlungsknoten VK in einem Breitband-Vermittlungssystem, bei dem die Nachrichten in Blöcke zerlegt werden. Die Blöcke werden über breitbandige Übertragungswege des Breitband-Vermittlungssystems nach einem asynchronen Zeitvielfachverfahren übertragen. Im Vermittlungsknoten VK werden die von dessen mit Eingangsleitungen EL verbundenen Eingangsschaltungen ES empfangenen Blöcke vor dem Weiterleiten zu dessen Ausgangsschaltung AS zwischengespeichert. Fig. 1 zeigt die Zwischenspeicherung der Blöcke in mit einem Koppelfeld KF verbundenen Ausgangspuffern AP.

Mittels dem Koppelfeld KF lassen sich Blöcke von mehreren Eingangsleitungen EL auf mehrere Ausgangsleitungen AL schalten. In der nicht vorveröffentlichten deutschen Patentanmeldung mit dem amtlichen Aktenzeichen P 37 14 385.9 ist eine Koppeleinrichtung beschrieben, die für die Zeit der Übertragung eines Blocks eine Verbindung zwischen einer Eingangsleitung EL und jeder beliebigen Ausgangsleitung AL herstellen kann. Es hat sich jedoch herausgestellt, daß die Verkehrsleistung einer allgemeinen Koppeleinrichtung durch das Auftreten von Konflikten beschränkt ist. Dieses geschieht, wenn auf zwei oder mehreren der Eingangsleitungen EL Blöcke für die gleiche Ausgangsleitung AL angeboten werden. Da jede Ausgangsleitung AL nur einen Block aufnehmen kann, werden die nicht absetzbaren Blöcke auf der Eingangsleitung EL behindert. Damit diese nicht verloren gehen, sind sie zu puffern. Die dazu verwendeten Speicher haben nur eine endliche Kapazität. Es wurde untersucht, bei welcher Belastung der Eingangsleitungen EL mit Blöcken ein so großer Rückstau auftritt, daß ankommende Blöcke verloren gehen können, da der Pufferplatz im Wartepuffer (z.B. Eingangspuffer) für sie nicht ausreicht.

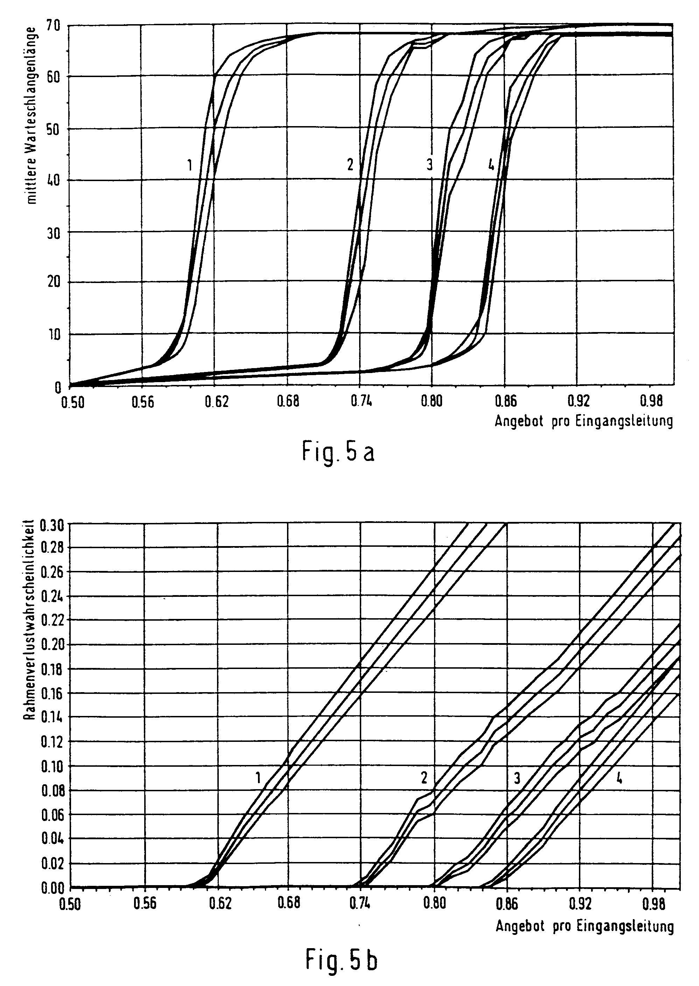

Die Untersuchungen haben ergeben, daß bei gleichmäßiger Belastung aller Eingangsleitungen EL bereits bei einem relativen Verkehrsangebot von wenig mehr als 50%, große Verlustwahrscheinlichkeiten für Blöcke entstehen können (siehe auch Fig. 5a und 5b). Dieses ist für die meisten Anwendungen nicht ausreichend, da für solche Leitungen eine sehr viel höhere Auslastung vorgesehen ist. Außerdem können sich die Verhältnisse bei unsymmetrischer Belastung noch weiter verschlechtern.

Durch die in der Zeichnung dargestellten Koppelfelder bzw. Koppelfeldsteuerung werden die sich aus den Leistungsuntersuchungen ergebenden Randbedingungen so geändert, daß keine größeren Verzögerungen und Verluste der Blöcke entstehen können. Dieses kann auf mehrere Arten bzw. Kombinationen davon geschehen:

- Die Übertragungsrate des Koppelfelds kann durch strukturelle Änderungen vergrößert werden
- Das Koppelfeld kann vervielfacht werden
- Die Eingangspuffer können umorganisiert werden
- Die Zuteilungsstrategie kann verändert werden.

Die Leistung des Breitband-Vermittlungssystems kann dadurch gesteigert werden, daß das Koppelfeld schneller schalten kann. Dieses kann dadurch realisiert werden, daß eine schnellere Technologie verwendet wird, was jedoch bei der gegenwärtigen Halbleitertechnologie noch nicht realisierbar erscheint. Daher sind strukturelle Maßnahmen vorzusehen, um ein schnelleres Schalten des Koppelfelds zu erreichen.

In Fig. 2 ist ein Koppelfeld KF dargestellt, bei dem die Übertragung der Blöcke im Koppelfeld KF bitparallel erfolgt, wodurch die Übergangszeit der Blöcke im Koppelfeld KF reduziert und die Wahrscheinlichkeit für das Auftreten von Konflikten vermindert wird. Im Vergleich zur rein bitseriellen Übertragung werden bei der bitparallelen Übertragung statt einer, mehrere Leitungen in jedem Kreuzungspunkt der Koppeleinrichtung durchgeschaltet und die Blöcke in Unterblöcke entsprechend vieler Bits zerlegt.

Bei der in Fig. 2 dargestellten Ausführungsform des Koppelfelds KF werden 4 Bits parallel übertragen. Die Steuerlogik braucht sich hierbei nicht von der in der P 37 14 385.9 beschriebenen zu unterscheiden, jedoch ist eine entsprechend größere Zahl von Schaltern vorzusehen, hier viermal so viele, die die Eingangsleitung EL auf die Ausgangsleitung AL schalten.

Wie bei allen Verfahren, die die Übertragungsgeschwindigkeit des Koppelfelds vergrößern, kann in der Zeit, in der ein Block auf eine Fernleitung gegeben werden kann, mehr als ein Block bei einer Ausgangsschaltung AS eintreffen. Daraus folgt, daß diese Blöcke zusätzlich gepuffert werden müssen.

Da integrierte Wartepuffer (z.B. Eingangspuffer EP oder Ausgangspuffer AP) üblicherweise eine Taktrate haben, die deutlich unter jener der Fernleitungen liegen, wäre es auch hier sinnvoll, die Blöcke in paralleler Form zu puffern. Dadurch würde sich die Zeit, die benötigt wird, um einen Block weiterzutakten, entsprechend dem Parallelisierungsgrad verringern.

Um die Übertragungsgeschwindigkeiten des Koppelfelds zu vergrößern, kann auch das Koppelfeld selbst vervielfacht werden. In jeder Eingangsschaltung ES verteilt ein Schalter die ankommenden Blöcke gleichmäßig auf die einzelnen Koppelfelder KF, so daß deren Belastung unter einer kritischen Grenze bleibt. Am Ausgang werden die Blöcke, die für die gleiche Ausgangsleitung AL vorgesehen sind, in einem gemeinsamen Puffer bis zur Ausgabe gespeichert.

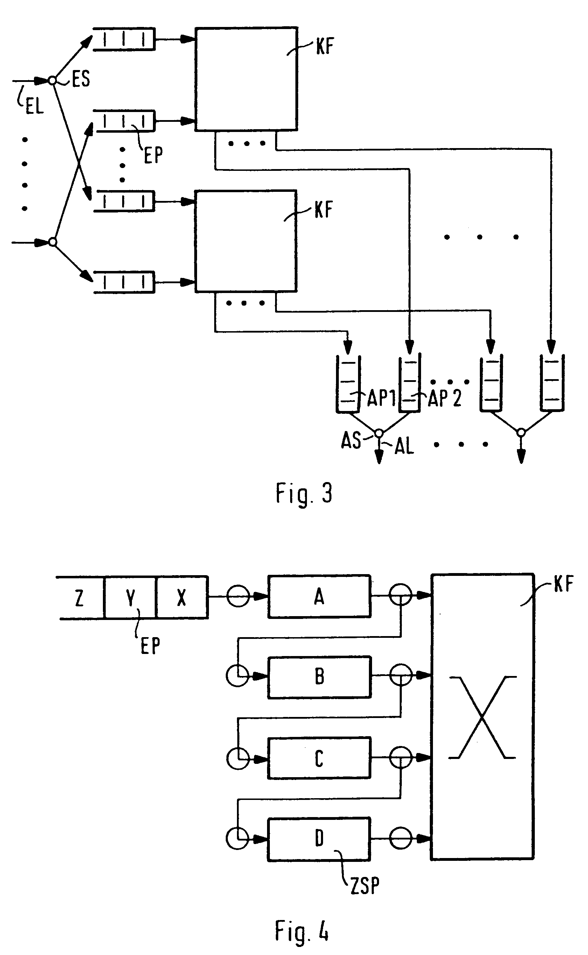

Bei diesem Verfahren, für das in Fig. 3 eine Ausführungsform mit zwei Koppelfeldern dargestellt ist, ist ebenfalls ein Wartepuffer am Ausgang vorzusehen, der noch zusätzlich die Eigenschaft besitzen muß, mehr als einen Block gleichzeitig aufnehmen zu können. Da dieses u.U. technisch schwierig ist, wurde bei der in Fig. 3 dargestellten Ausführungsform für jedes Koppelfeld KF und jede Ausgangsschaltung AS ein eigener Puffer AP1, AP2 vorgesehen. Die Ausgangsschaltung AS wählt dann aus allen ihr zugeordneten Puffern AP1, AP2 einen Block aus, was mittels eines n:1-Multiplexer geschehen kann. Dieses Verfahren verringert allerdings den sonst ausnutzbaren Bündelungsgewinn der Wartepuffer. Es ist auch eine Kombination beider Verfahren mit mehreren kurzen Eingangsund einem längeren gemeinsamen Wartepuffer denkbar.

Bei diesem Koppelfeld kann es geschehen, daß von der gleichen Eingangsschaltung ES auf die gleiche Ausgangsschaltung AS zu übertragende Blöcke - welche somit einer Verbindung angehören können - sich überholen. Das muß jedoch vermieden werden, da die Reihenfolge der Blöcke für die Teilnehmer eine notwendige Information darstellt. Dieses kann z.B. dadurch erreicht werden, daß die Blöcke eine entsprechende Kennung erhalten, die nur innerhalb eines Vermittlungsknotens VK verwendet wird.

Wie Leistungsuntersuchungen ergeben haben, ist es zu vermeiden, daß Blöcke in einer Eingangsschaltung ES verzögert werden, obgleich die Ausgangsschaltung AS, zu der die Eingangsschaltung ES ihre Blöcke senden will, frei ist. Dieses kann geschehen, wenn der Eingangspuffer EP nur den Block, welcher im Eingangspuffer EP am vorderen Ende steht, abarbeiten kann. Vermeidet man derartige Konflikte, indem man einer Eingangsschaltung ES gestattet, zwei oder mehrere Blöcke am vorderen Ende des Eingangspuffers EP auf das Koppelfeld KF zu legen, so verbessert sich die Leistung des Systems beträchtlich.

Den Fig. 5a und 5b entnimmt man, daß bereits eine Vergrößerung der Pufferzugriffstiefe auf 2 Blöcke die Belastbarkeit des Systems um ca. 14% vergrößert. Daher bewirkt diese Maßnahme eine deutliche Verbesserung der Leistung des Systems, ohne daß Probleme bei den Koppelfeldern gemäß Fig. 2 oder Fig. 3 mit den Ausgangspuffern AP oder sich überholenden Blöcken auftreten.

Der Wartepuffer wird zur Vergrößerung der Pufferzugriffstiefe gemäß Fig. 4 in den Eingangspuffer EP und Zwischenpuffer ZSP zerlegt, welche nur als logisch getrennt vom Eingangspuffer EP betrachtet werden sollen; sie können ein Teil dieses Puffers sein. Ein Block in Zwischenpuffer A wird auf das Koppelfeld KF gelegt, wenn dieses den Block abnehmen kann. Kann sie ihn nicht übernehmen, so wird der Block stattdessen in den Zwischenpuffer B geschoben. In beiden Fällen wird der nächste Block X aus dem Eingangspuffer EP in den Zwischenpuffer A getaktet. Dieses geschieht solange, wie sich ein freier Zwischenpuffer ZSP findet. Danach wartet die Eingangspuffersteuerung EPST solange ab, bis ein Block abgesetzt werden konnte. Da es jetzt vier Blöcke dem System anbieten kann, ist die Wahrscheinlichkeit hierfür sehr groß. Im folgenden ist dieser Zusammenhang für eine Pufferzugriffstiefe von 4 tabellarisch dargestellt.

| Es wird gesendet: | | | | Nachfolgeblock an der Stelle von | | | | | |
|---|---|---|---|---|---|---|---|---|---|
| A | B | C | D | A | B | C | D | X | Y |
| – | – | – | – | A | B | C | D | X | Y |
| A | – | – | – | X | B | C | D | Y | Z |
| – | B | – | – | X | A | C | D | Y | Z |
| – | – | C | – | X | A | B | D | Y | Z |
| – | – | – | D | X | A | B | C | Y | Z |
| A | B | – | – | X | – | C | D | Y | Z |
| A | – | C | – | X | – | B | D | Y | Z |
| A | – | – | D | X | – | B | C | Y | Z |
| – | B | C | – | X | A | – | D | Y | Z |
| – | B | – | D | X | A | – | C | Y | Z |
| – | – | C | D | X | A | B | – | Y | Z |
| A | B | C | – | X | – | – | D | Y | Z |
| A | B | – | D | X | – | – | C | Y | Z |
| A | – | C | D | X | – | B | – | Y | Z |
| – | B | C | D | X | A | – | – | Y | Z |
| A | B | C | D | X | – | – | – | Y | Z |

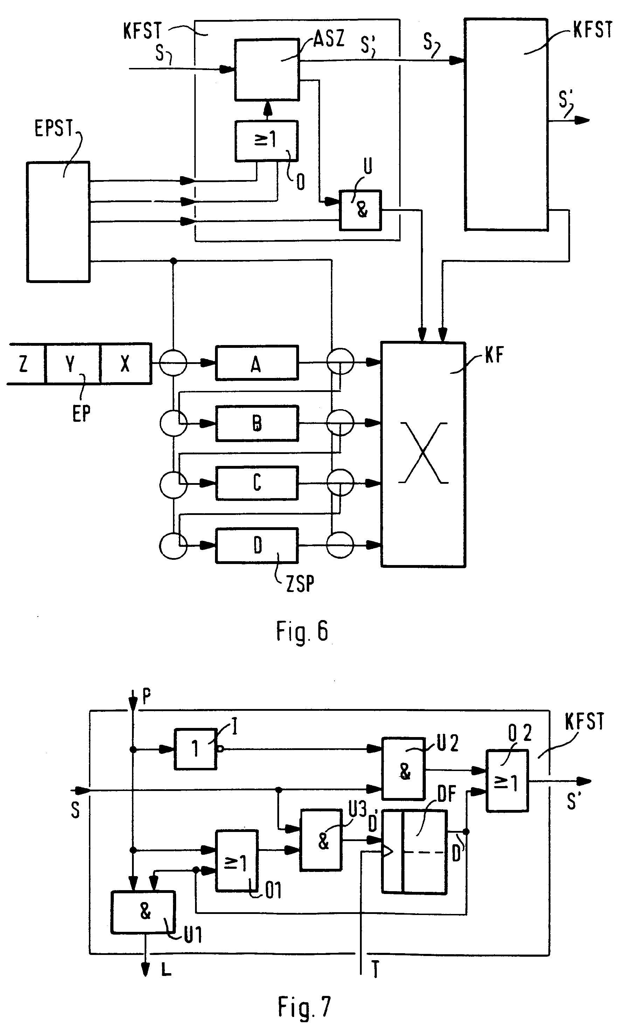

Eine Entscheidungslogik sorgt dafür, daß alle Blöcke in den Zwischenpuffern ZSP einer Eingangsschaltung ES in der richtigen Reihenfolge auf das Koppelfeld KF weitergereicht werden. Die Entscheidungslogik umfaßt bei der in Fig. 6 dargestellten Koppelfeldsteuerung, sogenannte Teilkoppelfeldsteuerungen KFST sowie Eingangspuffersteuerungen EPST.

Die Teilkoppelfeldsteuerung KFST weist eine Auswahlzyklusschaltung ASZ auf, welche über eine Leitung mit dem Steuersignal S bzw. S' mit der vorhergehenden und der nachfolgenden Teilkoppelfeldsteuerung KFST verbunden ist. Für den Fall einer Eingangspuffersteuerung EPST mit vergrößerter Pufferzugriffstiefe ist die Auswahlzyklusschaltung ASZ mit dem Ausgang eines ODER-Gatters O und einem Eingang eines UND-Gatters U verbunden. Die beiden Eingänge des ODER-Gatters O und der zweite Eingang des UND-Gatters U stehen mit der Eingangspuffersteuerung EPST mit vergrößerter Pufferzugriffstiefe in Verbindung.

Die Teilkoppelfeldsteuerung KFST speichert die Information, welcher Eingangspuffer EP zuletzt mit dem dieser Teilkoppelfeldsteuerung KFST zugeordneten Ausgangspuffer AP verbunden war. Für den Fall, daß mehrere Eingangspuffer EP mit dem der Teilkoppelfeldsteuerung KFST zugeordneten Ausgangspuffer AP verbunden werden sollen, wählt die Teilkoppelfeldsteuerung KFST denjenigen Eingangspuffer EP aus, welcher in einem fest vorgegebenen Auswahlzyklus zwischen allen Eingangspuffern EP hinter dem zuletzt ausgelesenen Eingangspuffer EP steht.

Der Auswahlzyklus ist beispielsweise durch die räumliche Anordnung der Eingangspuffer EP bestimmt.

Die Entscheidungslogik wählt also von allen Eingangsschaltungen ES, die zu gleichen Ausgangsschaltungen AS senden wollen, eine Eingangsschaltung ES aus. Dieses geschieht zyklisch. In Fig. 7 ist eine Ausführungsform für eine Koppelfeldsteuerung dargestellt.

Die Teilkoppelfeldsteuerung KFST enthält ein D-Flip-Flop DF, in welchem die Information darüber gespeichert wird, welcher Eingangspuffer EP zuletzt mit dem dieser Teilkoppelfeldsteuerung KFST zugeordneten Ausgangspuffer AP verbunden war. Zur Zuführung eines Sendebereitschaftssignals P ist der Eingangspuffer EP mit einem ersten Eingang eines ersten UND-Gatters U1, einem ersten Eingang eines ersten ODER-Gatters O1 und dem Eingang eines Inverters I verbunden. Der Ausgang des Inverters I liegt an einem ersten Eingang eines zweiten UND-Gatters U2 an.

Die vorhergehende Teilkoppelfeldsteuerung KFST ist zur Zuführung eines Steuersignals S mit dem zweiten Eingang des zweiten UND-Gatters U2 und dem ersten Eingang eines dritten UND-Gatters U3 verbunden

7

EP 0 321 050 B1

ist. Der zweite Ausgang des dritten UND-Gatters U3 ist mit dem Ausgang des ersten ODER-Gatters O1 und der Ausgang des dritten UND-Gatters U3 ist mit dem D-Eingang des D-Flip-Flops DF verbunden. Der Q-Ausgang des D-Flip-Flops DF ist mit dem ersten Eingang eines zweiten ODER-Gatters O2, mit dem zweiten Eingang des ersten ODER-Gatters O1 und mit dem zweiten Eingang des ersten UND-Gatters U1 verbunden. Mit dem zweiten Eingang des zweiten ODER-Gatters O2 ist der Ausgang des zweiten UND-Gatters U2 verbunden. Zur Zuführung eines Lesesignals L ist der Ausgang des ersten UND-Gatters U1 mit dem Eingangspuffer EP verbunden und am Ausgang des zweiten ODER-Gatters O2 ist die nachfolgende Teilkoppelfeldsteuerung KFST angeschlossen.

Die Funktionsweise dieser Koppelfeldsteuerung ist wie folgt:

Im D-Flip-Flop DF wird gespeichert, welche Eingangsschal tung ES als letzte gesendet hatte. Diese hat jetzt die geringste Priorität. Durch die Entscheidungslogik wird die im Zyklus als nächste kommende Eingangsschaltung ES, welche einen Block auf diese Ausgangsschaltung AS senden will, ausgewählt. Deren D-Flip-Flop DF wird gesetzt, das alte gelöscht, und durch Senden des Lesesignals L wird diese Eingangsschaltung ES informiert, daß sie einen Block absetzen kann.

In der Eingangspuffersteuerung EPST wird für alle Zwischenpuffer ZSP ein Signal gebildet, welches der Entscheidungslogik signalisiert, daß einer der Zwischenpuffer ZSP dieser Eingangsschaltung ES auf diese Ausgangsschaltung AS senden will. Sobald diese Leitung freigegeben ist (durch Senden des Lesesignals L), wird der erste (am weitesten vorne im Puffer) stehende Block ausgewählt. Dieser kann dann auf diese Ausgangsschaltung AS gelegt werden.

Bei einem Koppelfeld gemäß Fig. 4 wird die Zahl der Eingangsleitungen des Koppelfelds KF vergrößert (vervierfacht). Es ist möglich, auch die Zahl der Ausgangsleitungen des Koppelfelds KF zu vergrößern, und jeder ausgehenden Fernleitung mehrere Leitungen im Koppelfeld KF zuzuordnen. Wieder ist es hier notwendig, daß auch in der Ausgangsschaltung AS Wartepuffer vorzusehen sind, da die Zugangsrate von Blöcken kurzfristig die maximale Senderate übersteigen kann. Die Leistung eines solchen Koppelfelds unterscheidet sich kaum von der eines Koppelfelds nach Fig. 4, welches jedoch ohne Ausgangspuffer AP auskommt.

Die Funktionsweise der in Fig. 7 dargestellten Koppelfeldsteuerung läßt sich auch durch die im folgenden angegebenen Gleichungen gemäß der Bool'schen Algebra beschreiben.

$$(I) \qquad D' = S \wedge (D \vee P)$$
$$(II) \qquad S' = D \vee (S \wedge \bar{P})$$
$$(III) \qquad L = D \wedge P$$

Die Bedeutung der Signale ist dabei:

S:  Ausgangsleitung ist frei
D:  Diese Eingangsleitung hat zuletzt gesendet
L:  Diese Eingangsleitung kann senden
P:  Anmelden eines Sendewunsches
T:  Takt

In der nicht vorveröffentlichten deutschen Patentanmeldung mit dem amtlichen Aktenzeichen P 37 14 385.9 wurde aufgezeigt, daß eine Entscheidungslogik dafür sorgen kann, daß alle Blöcke, die zu einem Zeitpunkt auf die gleiche Ausgangsschaltung AS senden wollen, dieses in einer bestimmten Reihenfolge durchführen. Diese Zuteilungsstrategie ist priorisierend, da sie bestimmte Eingangsschaltungen ES (mit niedrigerer Nummer) aufgrund der räumlichen Anordnung bevorzugt abfertigt. Dadurch entsteht eine zusätzlich Verlustwahrscheinlichkeit, die von der Nummer der Eingangsschaltung ES abhängt.

Die vorliegende Koppelfeldsteuerung (Entscheidungslogik) läßt sich gleichfalls beim Gegenstand der P 37 14 385.9 anwenden.

Aber auch die dort vorgeschlagene Zuteilungsstrategie kann durch sehr einfache Maßnahmen verbessert werden. Dazu ist die Reihenfolge der Prioritäten in dem dort gewählten Zyklus durch Vertauschen der Anschlüsse einfach zu ändern.

Jede Eingangsschaltung ES sollte durch verschiedene Ausgangsschaltungen AS eine andere Priorität haben können, z.B. in der folgenden Form bei 16 Ein- und Ausgangsschaltungen:

```
Ausgang       Fallende Priorität der Eingangsschaltungen
 -1       :   1  2  3  4  5  6  7   8   9 10 11 12 13 14 15 16
 -2       :   2  3  4  5  6  7  8   9  10 11 12 13 14 15 16  1
 -3       :   3  4  5  6  7  8  9  10  11 12 13 14 15 16  1  2
.....         ...  ...  ...  ...    ...    ...     ...    ...
-16       :  16  1  2  3  4  5  6   7   8  9 10 11 12 13 14 15
```

Neben dieser sind auch andere Permutationen der Reihenfolgen und damit Veränderungen der Priorität möglich.

## Patentansprüche

1. Vermittlungsknoten eines Breitband-Vermittlungssystems, das zur Zerlegung von Nachrichten in Blöcke und zur Übertragung der Blöcke über breitbandige Übertragungswege nach einem asynchronen Zeitvielfachverfahren dient,
mit Eingangsschaltungen (ES), die zur Zuführung von Blökken über Eingangsleitungen (EL) und zur Zwischenspeicherung der Blöcke vorgesehen ist, und
mit einem Koppelfeld (KF), welches zur Weiterleitung der Blöcke an Ausgangsschaltungen (AS) vorgesehen ist,
dadurch gekennzeichnet,
daß jede Eingangsschaltung (ES) einen Wartepuffer zur Vergrößerung der Pufferzugriffstiefe mit wenigstens einem Eingangspuffer (EP) und in Serie liegenden Zwischenpuffern (ZSP) enthält,
daß das Eingangspuffer (EP) einer Eingangsschaltung (ES) zur Zwischenspeicherung der auf der zugeordenten Eingangsleitung (EL) hintereinander ankommenden Blöcke vorgesehen ist,
daß die Zwischenpuffer (ZSP) zur Zwischenspeicherung der von dem Eingangspuffer (EP) ausgegebenen Blöcke dienen und daß jeder Zwischenpuffer zur Absetzung eines zwischengespeicherten Blockes über das Koppelfeld (KF) zu einer Ausgangsschaltung (AS) vorgesehen ist.

2. Vermittlungsknoten nach Anspruch 1,
dadurch gekennzeichnet,
daß der mit dem Eingangspuffer (EP) gekoppelte Zwischenpuffer (A) zur Zwischenspeicherung eines Blocks von dem Eingangspuffer (EP) und die anderen Zwischenpuffer (B, C, D) zur Zwischenspeicherung eines Blocks von dem davorliegenden Zwischenpuffer vorgesehen sind und
daß die Zwischenpuffer (A, B, C, D) derart gestaltet sind,
daß eine Zwischenspeicherung in einem Zwischenpuffer nur bei keiner bisher vorgenommenen Zwischenspeicherung oder bei einer Weiterleitung des bisher gespeicherten Blockes an das Koppelfeld oder an den nachfolgenden Zwischenpuffer erfolgt.

3. Vermittlungsknoten nach Anspruch 1 oder 2,
dadurch gekennzeichnet,
daß jeder Ausgangsschaltung (AS) jeweils eine Teilkoppelfeldsteuerung (KFST) zugeordnet ist, welche die Information darüber speichert, welcher Eingangspuffer (EP) zuletzt mit dem dieser Teilkoppelfeldsteuerung (KFST) zugeordneten Ausgangspuffer (AP) verbunden war,
daß die Teilkoppelfeldsteuerung (KFST) für den Fall, daß mehrere Eingangspuffer (EP) mit dem zugeordneten Ausgangspuffer (AP) verbunden werden sollen, denjenigen Eingangspuffer (EP) auswählt, welcher in einem fest vorgegebenen Auswahlzyklus aller Eingangspuffer (EP) hinter den zuletzt ausgelesenen Eingangspuffer (EP) steht.

4. Vermittlungsknoten nach Anspruch 3,
dadurch gekennzeichnet,
daß der Auswahlzyklus durch die räumliche Anordnung der Eingangspuffer (EP) bestimmt ist.

5. Vermittlungsknoten nach Anspruch 3,
dadurch gekennzeichnet,

EP 0 321 050 B1

daß die Teilkoppelfeldsteuerung (KFST) eine Auswahlzyklusschaltung (ASZ) aufweist, welche über eine Leitung (S bzw. S') mit der vorhergehenden und der nachfolgenden Teilkoppelfeldsteuerung (KFST) verbunden ist,

daß die Auswahlzyklusschaltung (ASZ) mit dem Ausgang eines ODER-Gatters (O) und einem Eingang eines UND-Gatters (U) verbunden ist und

daß die beiden Eingänge des ODER-Gatters (O) und der zweite Eingang des UND-Gatters (U) mit einer Eingangspuffersteuerung (EPST) mit vergrößerter Pufferzugriffstiefe in Verbindung stehen.

6. Vermittlungsknoten nach Anspruch 3,
dadurch gekennzeichnet,
daß die Teilkoppelfeldsteuerung (KFST) ein D-Flip-Flop (DF) enthält, in welchem die Information darüber gespeichert wird, welcher Eingangspuffer (EP) zuletzt mit dem dieser Teilkoppelfeldsteuerung (KFST) zugeordneten Ausgangspuffer (AP) verbunden war,
daß der Eingangspuffer (EP) zur Zuführung eines Sendebereitschaftssignals (P) mit einem ersten Eingang eines ersten UND-Gatters (U1), einen ersten Eingang eines ersten ODER-Gatters (O1) und dem Eingang eines Inverters (I) verbunden ist,
daß der Ausgang des Inverters (I) an einem ersten Eingang eines zweiten UND-Gatters (U2) anliegt,
daß die vorhergehende Teilkoppelfeldsteuerung (KFST) zur Zuführung eines Steuersignals (S) mit dem zweiten Eingang des zweiten UND-Gatters (U2) und dem ersten Eingang eines dritten UND-Gatters (U3) verbunden ist,
daß der zweite Ausgang des dritten UND-Gatters (U3) mit dem Ausgang des ersten ODER-Gatters (O1) und der Ausgang des dritten UND-Gatters (U3) mit dem D-Eingang des D-Flip-Flops (DF) verbunden ist,
daß der Q-Ausgang des D-Flip-Flops (DF) mit dem ersten Eingang eines zweiten ODER-Gatters (O2), mit dem zweiten Eingang des ersten ODER-Gatters (O1) und mit dem zweiten Eingang des ersten UND-Gatters (U1) verbunden ist,
daß mit dem zweiten Eingang des zweiten ODER-Gatters (O2) der Ausgang des zweiten UND-Gatters (U2) verbunden ist,
daß zur Zuführung eines Lesesignals (L) der Ausgang des ersten UND-Gatters (U1) mit dem Eingangspuffer (EP) verbunden ist und
daß am Ausgang des zweiten ODER-Gatters (O2) die nachfolgende Teilkoppelfeldsteuerung (KFST) angeschlossen ist.

7. Vermittlungsknoten nach Anspruch 1 oder 2,
dadurch gekennzeichnet,
daß jeder Ausgangsschaltung (AS) jeweils eine Teilkoppelfeldsteuerung (KFST) zugeordnet ist, welche die Information darüber speichert, welche Eingangspuffer (EP) mit dem zugeordneten Ausgangspuffer (AP) verbunden werden sollen und welche aus der räumlichen Anordnung der Eingangspuffer (EP) eine sequentiell abzuarbeitende Prioritätsfolge ableitet.

## Claims

1. A switching node of a wideband switching system which serves to segment messages into blocks and to transmit the blocks via wideband transmission paths in accordance with an asynchronous time-division multiplex method, comprising input circuits (ES) which are provided to supply blocks via input lines (EL) and to buffer the blocks, and a switching network (KF) which is provided to convey the blocks to output circuits (AS), characterized in that
each input circuit (ES) comprises a queue buffer for enhancing the degree of buffer access, provided with at least one input buffer (EP) and series-connected intermediate buffers (ZSP), the input buffer (EP) of an input circuit (ES) is provided to buffer the blocks successively arriving via the associated input line (EL), the intermediate buffers (ZSP) serve to buffer the blocks output by the input buffer (EP), and
each intermediate buffer is provided to transfer a buffered block, via the switching network (KF), to an output circuit (AS).

2. A switching node as claimed in Claim 1, characterized in that
the intermediate buffer (A) which is coupled to the input buffer (EP) serves to buffer a block from the input buffer (EP), and the other intermediate buffers (B,C,D) serve to store a block from the preceding intermediate buffer, and the intermediate buffers (A,B,C,D) are constructed so that buffering in an intermediate

10

buffer takes place only if no buffering has taken place thus far, or if the block stored thus far is conveyed to the switching network, or to the succeeding intermediate buffer.

3. A switching node as claimed in Claim 1 or 2, characterized in that
with each output circuit (AS) there is associated a respective partial switching network control (KFST) which stores the information as to which input buffer (EP) was connected last to the output buffer (AP) associated with this partial switching network control (KFST),
the partial switching network control (KFST) selects, in the case where several input buffers (EP) are to be connected to the associated output buffer (AP), that input buffer (EP) which, in a fixed, predetermined selection cycle of all input buffers (EP), succeeds the input buffer (EP) read last.

4. A switching node as claimed in Claim 3, characterized in that
the selection cycle is determined by the spatial arrangement of the input buffers (EP).

5. A switching node as claimed in Claim 3, characterized in that
the partial switching network control (KFST) comprises a selection cycle circuit (ASZ) which is connected, via a line (S and S'), to the preceding and to the succeeding partial switching network control (KFST), the selection cycle circuit (ASZ) is connected to the output of an OR-gate (O) and to an input of an AND-gate (U), and the two inputs of the OR-gate (O) and the second input of the AND-gate (U) are connected to an input buffer control (EPST) with an enhanced degree of buffer access.

6. A switching node as claimed in Claim 3, characterized in that
the partial switching network control (KFST) comprises a D-flipflop (DF) which stores the information as to which input buffer (EP) was connected last to the output buffer (AP) associated with this partial switching network control (KFST),
the input buffer (EP) is connected, in order to supply a transmission enable signal (P), to a first input of a first AND-gate (U1), to a first input of a first OR-gate (O1), and to the input of an inverter (I),
the output of the inverter (I) is connected to a first input of a second AND-gate (U2), the preceding partial switching network control (KFST) is connected, in order to supply a control signal (S), to the second input of the second AND-gate (U2) and to the first input of a third AND-gate (U3),
the second output of the third AND-gate (U3) is connected to the output of the first OR-gate (O1) and the output of the third AND-gate (U3) is connected to the D-input of the D-flipflop (DF),
the Q-output of the D-flipflop (DF) is connected to the first input of a second OR-gate (O2), to the second input of the first OR-gate (O1), and to the second input of the first AND-gate (U1),
the output of the second AND-gate (U2) is connected to the second input of the second OR-gate (O2),
the output of the first AND-gate (U1) is connected to the input buffer (EP) in order to supply a read signal (L), and
the succeeding partial switching network control (KFST) is connected to the output of the second OR-gate (O2).

7. A switching node as claimed in Claim 1 or 2, characterized in that with each output circuit (AS) there is associated a respective partial switching network control (KFST) which stores the information as to which input buffers (EP) are to be connected to the associated output buffer (AP) and which derives an order of priority, to be sequentially executed, from the spatial arrangement of the input buffers (EP).

**Revendications**

1. Noeud de commutation d'un système de commutation à large bande, qui sert à scinder des messages en blocs et à transmettre les blocs par des voies de transmission à large bande selon un procédé asynchrone de multiplexage dans le temps, comportant des circuits d'entrée (ES), qui sont destinés à l'acheminement de blocs par des lignes d'entrée (EL) et au stockage temporaire des blocs, et une matrice de commutation (KF), qui est prévue pour transmettre les blocs à des circuits de sortie (AS), caractérisé en ce que chaque circuit d'entrée (ES) contient un tampon d'attente pour augmenter la profondeur d'accès du tampon avec au moins un tampon d'entrée (EP) et des tampons intermédiaires (ZSP) disposés en série, que le tampon d'entrée (EP) d'un circuit d'entrée (ES) est prévu pour le stockage temporaire des blocs arrivant l'un derrière l'autre sur la ligne d'entrée (EL) associée, que les tampons intermédiaires (ZSP) servent au stockage temporaire des blocs délivrés par le tampon d'entrée (EP) et que chaque tampon intermédiaire est prévu pour transmettre un bloc ayant fait l'objet d'un stockage temporaire via la matrice de commutation (KP) vers un circuit de sortie (AS).

2.  Noeud de commutation selon la revendication 1, caractérisé en ce que le tampon intermédiaire (A) couplé au tampon d'entrée (EP) pour le stockage temporaire d'un bloc du tampon d'entrée (EP) et les autres tampons intermédiaires (B, C, D) pour le stockage temporaire d'un bloc du tampon intermédiaire le précédant et les tampons intermédiaires (A, B, C, D) sont conformés, de telle sorte qu'un stockage temporaire dans un tampon intermédiaire ne s'effectue que lorsqu'aucun stockage temporaire n'a été réalisé jusque-là ou lorsque le bloc stocké jusque-là est acheminé à la matrice de commutation ou au tampon intermédiaire qui suit.

3.  Noeud de commutation selon la revendication 1 ou 2, caractérisé en ce qu'à chaque circuit de sortie (AS) est affectée respectivement une commande de matrice de commutation partielle (KFST), qui mémorise les informations visant à définir quel tampon d'entrée (EP) a été raccordé en dernier lieu au tampon de sortie (AP) affecté à cette commande de matrice de commutation partielle (KFST), que la commande de matrice de commutation partielle, dans le cas où plusieurs tampons d'entrée (EP) doivent être raccordés au tampon de sortie associé (AP), choisit le tampon d'entrée (EP) qui, dans un cycle de sélection prédéterminé de manière fixe de tous les tampons d'entrée (EP), se trouve derrière le tampon d'entrée (EP) qui a été lu en dernier lieu.

4.  Noeud de commutation selon la revendication 3, caractérisé en ce que le cycle de sélection est déterminé par l'agencement spatial des tampons d'entrée (EP).

5.  Noeud de commutation selon la revendication 3, caractérisé en ce que la commande de matrice de commutation partielle (KFST) présente un circuit de cycle de sélection (ASZ), qui est raccordé à la commande de matrice de commutation partielle (KFST) précédente et à la commande de matrice de commutation partielle (KFST) suivante via une ligne (S ou S'), que le circuit de cycle de sélection (ASZ) est raccordé à la sortie d'une porte OU (O) et à une entrée d'une porte ET (U), et que les deux entrées de la porte OU (O) et la deuxième entrée de la porte ET (U) sont en liaison avec une commande de tampon d'entrée (EPST) à profondeur d'accès accrue.

6.  Noeud de commutation selon la revendication 3, caractérisé en ce que la commande de matrice de commutation partielle (KFST) contient une bascule (D), dans laquelle sont mémorisées les informations visant à définir quel tampon d'entrée (EP) a été raccordé en dernier lieu au tampon de sortie (AP) associé à cette commande de matrice de commutation partielle (KFST), le tampon d'entrée (EP) est raccordé pour acheminer un signal de préparation d'envoi (P) à une première entrée d'une première porte ET (U1), à une première entrée d'une première porte OU (O1) et à l'entrée d'un inverseur (I), que la sortie de l'inverseur (I) est connectée à une première entrée d'une deuxième porte ET (U2), que la commande de matrice de commutation partielle (KFST) précédente pour l'acheminement d'un signal de commande est raccordée à la deuxième entrée de la deuxième porte ET (U2) et à la première entrée d'une troisième porte ET (U3), que la deuxième sortie de la troisième porte ET (U3) est raccordée à la sortie de la première porte OU (O1) et la sortie de la troisième porte ET (U3) à l'entrée D de la bascule (DF), que la sortie Q de la bascule (DF) est raccordée à la première entrée d'une deuxième porte OU (02), à la deuxième entrée de la première porte OU (O1) et à la deuxième entrée de la première porte ET (U1), que la sortie de la deuxième porte ET (U2) est raccordée à la deuxième entrée de la deuxième porte OU (O2), que pour l'acheminement d'un signal de lecture (L), la sortie de la première porte ET (U1) est raccordée au tampon d'entrée (EP) et que la commande de matrice de commutation partielle (KFST) suivante est raccordée à la sortie de la deuxième porte OU (O2).

7.  Noeud de commutation selon la revendication 1 ou 2, caractérisé en ce qu'à chaque circuit de sortie (AS) est affectée respectivement une commande de matrice de commutation partielle (KFST), qui mémorise les informations sur le tampon d'entrée (EP) qui doit être raccordé au tampon de sortie (AP) associé et qui tire de l'agencement spatial du tampon d'entrée (EP) une séquence de priorités opérant de manière séquentielle.

KST

VK

EL

ES

KF

AP

AL

AS

Fig. 1

KF

EL

EP

AP

AL

Fig. 2

Fig. 3

Fig. 4

Fig. 5 a

Fig. 5 b

Fig. 6

Fig. 7